Europäisches Patentamt

European Patent Office

Office européen des brevets

(19)

(11) Publication number: **0 055 462**
**A1**

(12) # EUROPEAN PATENT APPLICATION

(21) Application number: **81110694.7**

(22) Date of filing: **22.12.81**

(51) Int. Cl.³: **A 23 F 5/04**
**A 23 N 12/08**

(30) Priority: **26.12.80 JP 187462/80**

(43) Date of publication of application:
**07.07.82 Bulletin 82/27**

(84) Designated Contracting States:
**BE CH DE FR IT LI NL**

(71) Applicant: **Moriya, Nobuharu**
**19-2, 8-chome, Korigaoka**
**Hirakata Osaka(JP)**

(72) Inventor: **Moriya, Nobuharu**
**19-2, 8-chome, Korigaoka**
**Hirakata Osaka(JP)**

(74) Representative: **Patentanwälte Grünecker,**
**Dr.Kinkeldey Dr.Stockmair, Dr.Schumann,Jakob,**
**Dr.Bezold Meister, Hilgers, Dr.Meyer-Plath**
**Maximilianstrasse 43**
**D-8000 München 22(DE)**

(54) Method and device for roasting coffee beans.

(57) A method of roasting coffee beans by suspending and revolving the beans in a controlled, temperature and flow, column of air, and a device having an open ended funnel shaped container (9) removably mounted in a roaster body (1), a filter (8) mounted in the lower end of the container, an inlet air passage (7) mounted in the body and connected to the container, a blower (4) mounted in the body for supplying air to the container, an exhaust air passage (13) disposed in the body and connectable to the upper end of the container, a dust collector (18) mounted in the exhaust air passage for collecting dust, a heater element (2, 3) mounted in the inlet air passage and operable to heat the air passing through, timing devices connected to the blower and the heater element to control the operation thereof, a thermostat connected to the heater element to control the temperature of the air passing therethrough, and an air flow adjusting unit mounted in the inlet air passage to control the volume of air flowing therethrough.

EP 0 055 462 A1

./...

FIGURE 1

## Background of the Invention

This invention relates to the method and device of roasting coffee beans to a certain expected extent especially for roasting a quantity of two to eight servings.

Since roasting is the most important step and requires specialized expertise to produce taste and flavor, coffee beans have been roasted by coffee makers.

However, more and more self-roasting specialty stores are coming out because the taste and flavor deteriorate as the time goes by.

There is quite a variety of tastes in coffee such as more acidic or less bitter, and it is not easy to roast coffee beans to an expected particular taste from conventional large quantity roasting method, even the beans are ground and brewed fresh, right after roasting. Moreover, the fondness in taste is quite different from person to person, therefore, it would be ideal if there were a way to roast small quantity beans in a short time, also to roast by amateurs without having special techniques and experiences.

## Summary of the Invention

This invention provides a roasting method and roasting equipment to easily and quickly roast a small quantity of coffee beans in either coffee shops or households without requiring any special roasting techniques.

Another object of this invention is to provide roasting device for coffee beans which is extremely effective in use; which controls the roasting temperature and the flow of heated air to the beans; which roasts the beans while they are moving and revolving in a suspended state in a heated column of air; which is compact in size, and which is economical of operation.

A further object of this invention is to provide a method for roasting coffee beans which is extremely effective, which provides control of temperature and volume of a column of air to roast the beans to a desired condition and which provides for the roasting of small quantities adequate to brew two to ten cups of coffee.

Brief Description of the Drawings

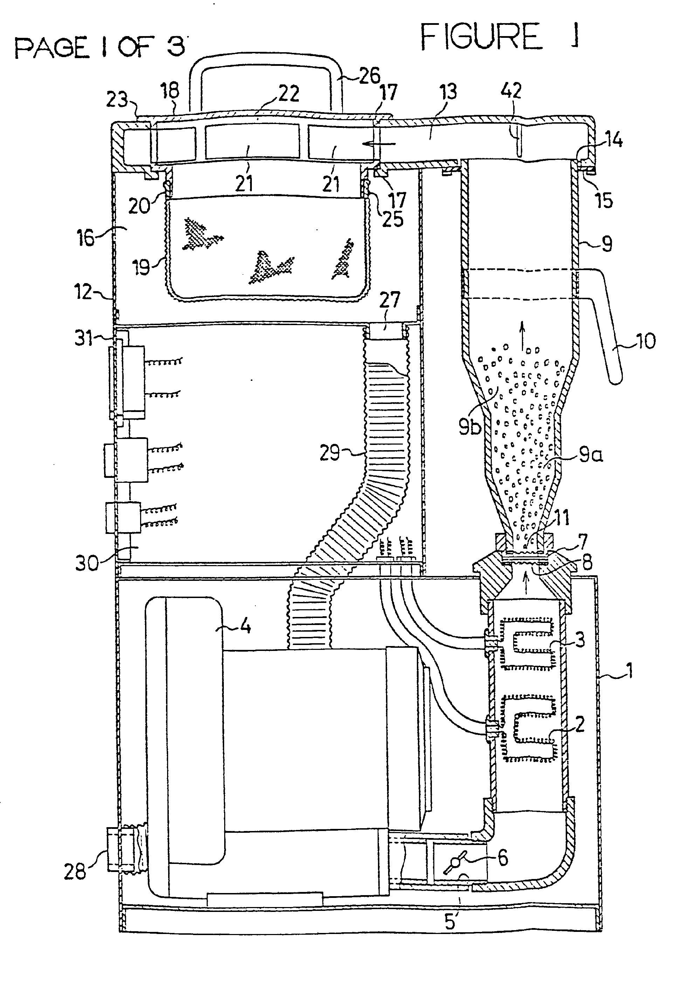

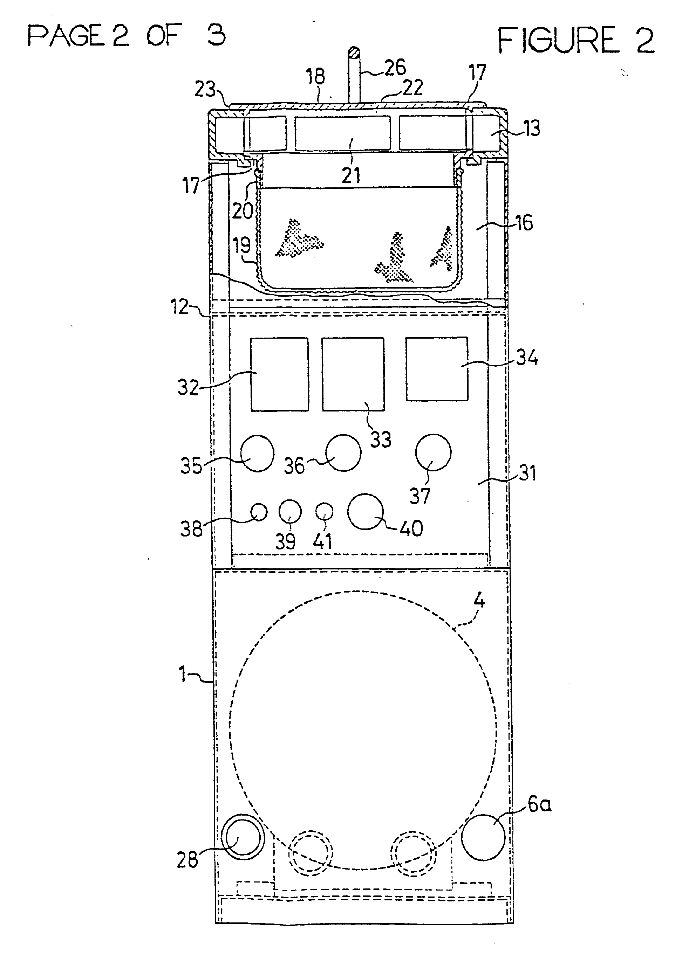

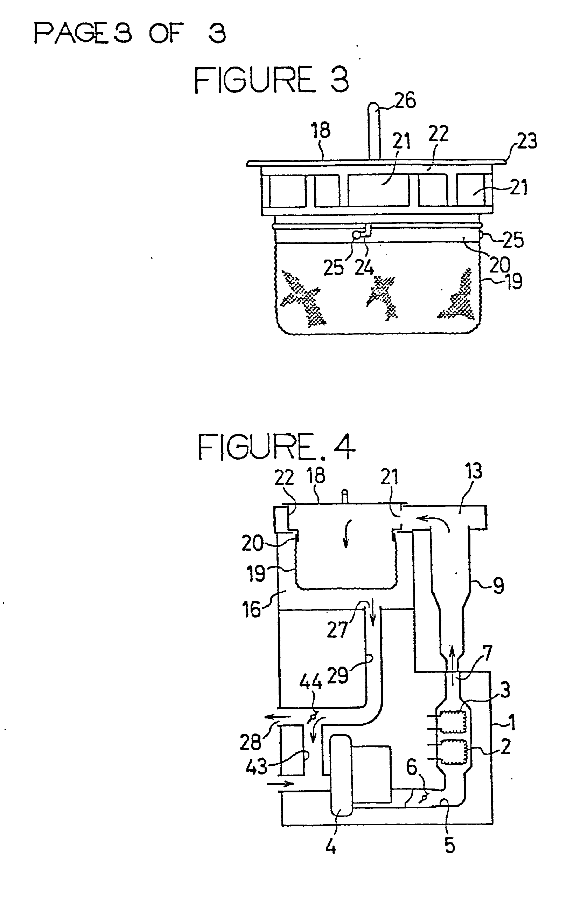

Figure 1 is an elevational view in section of the roaster device of this invention; Figure 2 is a rear elevational view, partially in section, as viewed from the panel side of the device; Figure 3 is a side elevational view of the dust collector wherein the other sides are substantially identical; and Figure 4 is a schematic flow diagram showing the flow of air through the device.

Description of the Preferred Embodiments of the Invention

Referring first to Figures 1 and 2, the device is described as follows:
A blower 4 for the purpose of supplying an air flow through nichrome wire heaters 2 and 3 is installed inside a roaster body 1, and a damper 6 is placed in an air passage 5 between blower 4 and heaters 2 and 3 to adjust the air flow by mean of adjusting knob 6a which is installed outside the roaster body 1. On the upper surface of the roaster body 1, a hot air inlet 7 with dust filter 8 made of wire screen or the like is placed so that the hot air may be fed to a roasting container 9. The roasting container 9 may be placed on and removed from the hot air inlet 7.

The roasting container 9, equipped with a handle 10, is totall or partially made of transparent material such as heat resisting glass so that the roasting status of coffee beans inside the container 9 can be observed from outside. The roasting container 9 is funnel shaped, and has a heat resisting filter consisted of wire screen 11 mounted in its base.

In this example, a two-stage funnel is used; the lower stage funnel 9a contains coffee beans for 2 to 3 servings, and about 10 servings can be put in the lower funnel 9a and the upper funnel 9b.

Above the roasting container 9, an exhaust air path 13 is placed in the body 1 and the air path is led to the upper part of a box part 12 which is located on the backside of roaster body 1. At the lower part of the exhaust air path 13, there is an opening 14 with a heat resisting seal 15 made silicone rubber or the like so that the roasting container 9 may be sealed, inserted and removed.

At the end and bottom part of exhaust air path 13, there is an exhaust air chamber 16 with large opening 17 therein to receive the exhaust air. A basket shaped dust collector 18, removable upward from exhaust air path 13, is placed in the opening 17 to collect dust from the air moving therethrough. The dust collector consists of the dust collecting part and frame part 22. The dust collecting part consists of a two-layer wire screen filter 19 with the inside wire screen having a 100 to 200 mesh and outside sire screen having a 3 to 10 mesh, and a band 20 fixed to the upper part of the abovesaid filter 19. The frame part 22 is made in a way that the dust collecting part may be inserted into opening 17 of exhaust air path 13, held inside the exhaust air chamber 16, and seated on the upper surface of the exhaust air path 13 by a brim 13. There is at least one opening 21 on the surface of frame part 21 which faces the exhaust air path 13. The dust collecting part is installed to and removable from frame part 22 as shown in Figure 3. There are several L-shaped slots 24 on the perimeter surface of the band 20, and the same number of pins 25 on the perimeter surface of frame part 22, thus the dust collecting part may be mounted in the frame 22 by inserting pins 25 through slots 24 while rotating the band 20. Using the reverse operation the dust collecting part may be removed. A handle 26 is connected to the dust collecting device.

An exhaust air opening 27, disposed under exhaust air chamber 26 and an exhaust air outlet 28 connected on the backside of roaster body 1 are connected by a bellows-shaped exhaust air pipe 29 formed of aluminium or the like. However, the path of the abovesaid exhaust air shall not be restricted by this example.

A control panel 31 is mounted on the back of a control room 30, which is located between the lower part of roaster body and the box part 12. On the control panel 31, a timer 32 which control heater 2, a timer 33 which controls heater 3, a hot air temperature setting device 34, a blower starting switch 35, a heater starting switch 36, a blower and heater stopping switch 37, a pilot lamp 38, fuse boxes 39 and 40, and a main switch 41 are installed to control the controlling elements which are located inside the control room yet not shown in the figures. A hot air measuring element 42 is located above the roasting container 9, in the exhaust air path 13. This element may also be located immediately above heaters 2 and 3, or immediately below the hot air inlet 7.

The roaster is operated by setting the timer 32 required for drying, setting the timer 33 to the time required for roasting, and having the heater 3 on-off operate according to the signal of hot air temperature measuring element 42 at the setting temperature of hot air temperature setting device 34.

The roasting method of this invention is explained as follows:

Coffee beans are charged into the roasting container 9, the top part of container 9 is inserted into the opening 14 of the exhaust air path 13, and the bottom part is inserted into hot air inlet 7 so that the container 9 may stand upright on the roaster body 1.

The main switch is pushed to an on-position to set the pilot lamp 38 on, and set heaters 2, 3 and timers 32, 33 at desired positions. These positions vary according to the quantity of coffee beans, but under the conditions described later, the drying process takes 2 to 4 minutes and the roasting process takes 4 to 8 minutes. The times for drying and roasting are adjusted according to personal preference. The air temperature setting device is set as desired. The temperature, measured at the top of the roasting container 9, is appropriate between the range of 180° to 220°C.

The blower switch 35 is pushed to on to start blower 4, the coffee beans should thus be suspended or floating and revolving in the roasting container 9. Adjustment to the air flow is made by moving the damper 6 through 6a. When the heater switch 36 is on, only the heater 2 acts by the timer 32 to heat the air which is then blown into roasting container 9. The heat capacity of heater 2 is so designed to prevent the burning of beans, therefore the moisture in the beans is reduced while the beans are in contact with the hot air. This process takes 2 to 4 minutes.

After drying, heater 3 is then started by timer 33 for roasting. That is, heater 3 supplements heater 2. When the hot air temperature detected by the hot air measuring element 42 reaches the point set at the hot air temperature setting device 34, heater 3 starts to act in an on-off operation, thus maintains the hot air at the desired-temperature. During this process, coffee beans are floated and revolved in the hot air, resulting in an extremely efficient contact between beans and hot air. An expected degree of roasting may be obtained in about 4 to 8 minutes. The time is set according to the types and quantity of beans and the degree of roasting desired.

When the time of drying and roasting processes set by timers 32 and 33 are completed, the power to heaters 2 and 3 are cut off. The heater and blower power source is then cut off by pushing the stop switch 37.

The dust produced in the drying and roasting processes passes through the exhaust air path 13, and is collected in dust collector 18. The exhaust gas passing through the filter 19 is exhausted through the air outlet 28. An extending duct not shown in the drawings may be connected with the exhaust air outlet 28 to direct the air outdoors.

In this example, the exhaust air is totally discharged from the roaster body. However, part of the exhaust air may be recirculated to save the power for heaters 2 and 3, as shown in Figure 4. In this figure, a branch pipe 43 is connected between the inlet of blower 4 and exhaust air pipe 29; a damper 44 is installed at the junction so that the flow of recirculation can be adjusted from the outside of the roaster body.

In this invention, the coffee beans are suspended and revolved in hot air, so beans are significantly uniformly heated without causing any local over-roasting, and an exact extent of roasting is easily obtained.

The roasting container is made of transparent glass, therefore the roasting status can be seen. The roasting can also be manually stopped by stopping heaters and blower instead of automatic operation above described.

The roasting container has a shape of two-stage funnel in this example, but it may be modified to other shapes such as single V-shape or multi-stage funnel.

The layout of roasting container, dust collector, or operating panel may not only be limited to the case of this example, but be modified depending on the operability for commercial or household application.

The drying process is provided to remove the moisture from the green bean at a temperature of approximately 100°C, without causing either over-roasting outside the bean or moisture holding inside the bean, thus a precise control of the roasting and the taste is expected.

Brief Explanation of Figures

Figure 1 shows a cross section, Figure 2, a partial cross section of backside, and Figure 3, dust collector of this example. Figure 4 shows another example of application.

| 1: | Roaster body | 2, 3: | Heater |
| 4: | Blower | 5: | Air passage |
| 6: | Damper | 7: | Air inlet |
| 9: | Roasting container | 11: | Filter |
| 13: | Exhaust air passage | 14: | Opening |
| 16: | Exhaust air chamber | 17: | Opening |
| 18: | Dust collector | 19: | Wire screen filter |
| 20: | Band part | 22: | Frame part |
| 24: | L-shape slot | 25: | Pin |
| 28: | Exhaust air outlet | 29: | Exhaust air pipe |
| 30: | Control room | 31: | Control panel |
| 32: | Timer | 33: | Timer |
| 34: | Hot air temperature setting device | 42: | Hot air temperature measuring element |

## Claim

1. A method for roasting coffee beans in a container having an open top end and having at least one opening in the bottom end, the method comprising:

charging the container with a predetermined quantity of coffee beans;

supplying air to said at least one opening for providing a column of air which flows upward through the container to exhaust therefrom through the open top end;

controlling the quantity of air to cause the beans to be suspended in and to revolve in the column of air; and

heating said column of air to a predetermined temperature for roasting the beans.

2. The method of claim 1 wherein the temperature of the column of air is first increased to a predetermined drying temperature to remove moisture from the beans prior to increasing the temperature to the roasting temperature.

3. The method of claim 2 wherein the drying temperature is approximately $100^{\circ}C$ and the roasting temperature is between $180^{\circ}C$ and $230^{\circ}C$.

4. A coffee bean roasting device comprising a roaster body; an open ended inlet air passage disposed in said body; a hot air inlet; said inlet air passage having one end terminating at said hot air inlet; an air blower mounted in said air passage; a heating element mounted in said air passage for heating air passing therethrough; and a container for holding coffee beans, said container having an open top end and a bottom end with at least one opening formed therein, said container removably mounted on said hot air inlet with said at least one opening fluidly connected with said inlet air passage, said air blower operable to provide a quantity of air to said hot air inlet and into said container through said at least one opening to suspend and revolve the coffee beans in said container.

5. A coffee bean roasting device as defined in claim 4 and said container is funnel shaped with said at least one opening formed in the smaller end thereof.

6. A coffee bean roasting device defined in claim 5 and including an open ended exhaust air passage disposed in said body and having one end removably and fluidly connected to said container open top end; a dust collector removably mounted in said exhaust air passage; a first timer operably connected to heater element; a second timer operably connected to said blower and said heater element; a temperature setting device operably connected to said heater; and said container is at least partially transparent.

7. A coffee bean roasting device as defined in claim 6 and an air flow adjusting device mounted in said inlet air passage; and a temperature controlling sensor mounted in said exhaust air passage said one end and operably connected to said heater and said temperature setting device.

8. A coffee bean roasting device as defined in claim 7 and said dust collector has a frame and a two layer filter, each layer being detachable from said frame.

FIGURE 1

0055462

FIGURE 2

FIGURE 3

FIGURE. 4

0055462

**European Patent Office**

# EUROPEAN SEARCH REPORT

Application number

EP 81 11 0694

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| XY | <u>CH - A - 374 591</u> (SPEZIAL TECHNIK) <br> * Claim; subclaims 7,8; page 1, line 45 - page 2, line 103; figures 1,2 * <br><br>-- | 1-4,6 | A 23 F 5/04 <br> A 23 N 12/08 |
| XY | <u>AU - B - 485 121</u> (P. BROCKHURST) <br> * Claims 1-12; page 4, paragraph 1 - page 6 * <br><br>-- | 1-7 | |
| Y | <u>US - A - 3 589 912</u> (I. ADLER) <br> * Claim 1; example * <br><br>-- | 2,3 | **TECHNICAL FIELDS SEARCHED (Int.Cl. 3)** <br><br> A 23 F 5/00 <br> A 23 N 12/00 <br> A 47 J 31/00 <br> 42/00 |
| X | <u>GB - A - 860 894</u> (SPEZIAL TECHNIK) <br> * Claim 1; page 2, lines 7-67; figure 1 * <br><br>-- | 1,4,5 | |
| X | <u>GB - A - 762 612</u> (METALLGESELL-<u>SCHAFT</u>) <br> * Claim 1; page 2, line 96 - page 3, line 48; figures * <br><br>---- | 1,3 | |

The present search report has been drawn up for all claims

| Place of search | Date of completion of the search | Examiner |
|---|---|---|
| The Hague | 15-03-1982 | DESMEDT |

EPO Form 1503.1 06.78